Europäisches Patentamt

European Patent Office

Office européen des brevets

(19)

(11) **EP 1 247 277 B1**

(12) **FASCICULE DE BREVET EUROPEEN**

(45) Date de publication et mention
de la délivrance du brevet:
**26.05.2004 Bulletin 2004/22**

(51) Int Cl.⁷: $G11B\ 7/00$, G11B 7/24,
G11B 7/007, G11B 5/54

(21) Numéro de dépôt: **01903861.1**

(22) Date de dépôt: **03.01.2001**

(86) Numéro de dépôt international:
**PCT/FR2001/000016**

(87) Numéro de publication internationale:
**WO 2001/050465 (12.07.2001 Gazette 2001/28)**

(54) **PROCEDE DE PHOTOINSCRIPTION DE DONNEES**

VERFAHREN ZUM LICHTINDUZIERTEN SCHREIBEN VON DATEN

METHOD FOR OPTICAL DATA RECORDING

(84) Etats contractants désignés:
**DE GB IT**

(30) Priorité: **04.01.2000 FR 0000041**

(43) Date de publication de la demande:
**09.10.2002 Bulletin 2002/41**

(73) Titulaires:
- **FRANCE TELECOM
75015 Paris (FR)**
- **CENTRE NATIONAL DE
LA RECHERCHE SCIENTIFIQUE (CNRS)
75794 Paris Cedex 16 (FR)**
- **ECOLE NORMALE SUPERIEURE DE CACHAN
94235 Cachan (FR)**

(72) Inventeurs:
- **TOUSSAERE, Eric
F-92320 Châtillon (FR)**
- **ZYSS, Joseph
F-92330 Sceaux (FR)**

(74) Mandataire: **Callon de Lamarck, Jean-Robert et al
Cabinet Régimbeau
20, rue de Chazelles
75847 Paris cedex 17 (FR)**

(56) Documents cités:
EP-A- 0 397 545          FR-A- 2 653 247
FR-A- 2 788 864          US-A- 4 953 924
US-A- 4 958 338          US-A- 5 381 391

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 247 277 B1

## Description

La présente invention est relative à la photo-inscription de données.

DOMAINE GENERAL DE L'INVENTION

Le stockage de données sur support optique numérique est amené à jouer un rôle croissant dans les technologies de l'information. Alors que des mémoires à faible ou moyenne densité sont déjà massivement présentes à des niveaux hiérarchiques inférieurs dans toutes les unités de traitement électronique de l'information, des mémoires à forte densité de stockage et grande rapidité d'accès sont nécessaires à différents noeuds amont de systèmes plus évolués tels que des réseaux de communication, des unités centrales de calculateurs ou des terminaux multimédia aux fins de stockage de données visuelles et sonores. Une demande stratégique accrue à l'égard de mémoires à haute capacité permettant par exemple la distribution aisée et généralisée de documents multimédia sur formats CD est donc fortement ressentie. Une autre exigence forte relative aux mémoires à disque porte sur la confidentialité et la propriété des droits : les données digitalisées peuvent être aisément dupliquées dans la mesure où les procédés de lecture/écriture et de codage-décodage ainsi que les matériels et logiciels associés sont rendus accessibles. L'accès non contrôlé à une information insuffisamment protégée peut en effet induire des dommages catastrophiques dans les domaines de la production artistique, de la distribution multimédia ou de la sécurité des transactions.

Différents types de mémoires ou de disques enregistrables ont été conçus et mis en oeuvre à ce jour. Les mémoires magnétiques étaient les plus répandues jusqu'à l'introduction des disques compact sur support plastique (CD) qui ont permis de généraliser l'accès à l'enregistrement de données numériques à bas coût. La technologique des CD optiques est actuellement fondée sur un procédé simple de gravures d'empreintes sur substrat plastique. L'écriture est réalisée en grand volume et à bas coûts par des techniques industrielles d'embossage. La présence ou l'absence de ces empreintes est lue par un faisceau de sonde optique dont la réflexion ou la diffusion sur la gravure permet le décodage d'une information binaire (présence ou absence d'empreinte).

D'autres techniques sont toutefois disponibles pour l'enregistrement sous forme optique de l'information, l'holographie étant l'alternative la plus intéressante. Dans ce cas, l'illumination conduit à une modification du milieu d'enregistrement ce qui permet de stocker l'information en modulant spatialement l'intensité du faisceau d'écriture. Différents mécanismes physiques se prêtent à cette application, selon la nature des matériaux photosensibles : la réorientation de molécules en matrice polymère a été très tôt reconnue, dès le début des années 70, comme procédé de stockage holographique d'information, selon un principe physique découvert au début du siècle et appelé effet Weigert.

Un tel milieu consiste par exemple d'un film-hôte à base de polymère (host) dopé par une molécule « invitée » (guest) de type azobenzène. Après irradiation dans leur bande d'absorption, les molécules peuvent se réorienter à la suite de cycles de photoisomérisation déclenchés par absorption de la lumière incidente, ce spectre coïncidant avec la bande d'absorption des molécules invitées. L'irradiation par un faisceau polarisé linéairement induit une réorientation axiale des molécules perpendiculairement à la direction de polarisation de la lumière. Ce mécanisme induit une biréfringence linéaire dans le film qui augmente l'indice de réfraction perpendiculairement à la polarisation incidente de la pompe. La présence ou l'absence de biréfringence peut alors être utilisée pour le codage binaire de l'information. Il est alors important de noter que l'illumination par une lumière polarisée circulairement ou dépolarisée (i.e. polarisée aléatoirement) induit une polarisation axiale perpendiculairement au film qui aboutit donc à effacer l'information préalablement inscrite sous forme d'une biréfringence transverse dans le plan du film (cf. par exemple *Optically induced and erased birefringence and dichroism in azoaromatic polymers,* P. Rochon, J. Gosselin, A. Natansohn, S. Xie, Appl. Phys.Lett., 60(1), (1992), pp4-5). L'effet Weigert traditionnel résulte toutefois d'un procédé de pompage linéaire par absorption directe d'un photon provenant du rayonnement quasi-monochromatique d'une lampe filtrée ou d'une source laser uniques.

On peut généraliser cet effet par pompage à deux photons, correspondant à une irradiation de longueur d'onde déplacée vers l'infrarouge à hauteur de la moitié du maximum d'absorption de l'espèce moléculaire photosensible. Bien que moins efficace a priori que l'absorption à un photon, de nombreux travaux portent actuellement sur l'utilisation de pompage à deux photons qui permet de pénétrer dans le volume du matériau alors que la profondeur accessible par absorption résonnante à un photon est limitée par la profondeur de pénétration (cf. travaux de Paras Prasad et al. à l'Université Suny à Buffalo ou de J. Perry et al. au Jet Propulsion Lab. du Caltech ; cf. également la publication suivante :

- « Two-photon polymerization initiators for three-dimensional optical data storage and microfabrication », B.H. Cumpston, S.P. Ananthavel, S. Barlow, D.L. Dyer, J.E. Ehrlich, L.L. Erskine, A.A. Heikal, S.M. Kuebler, I.Y. Sandy Lee, D. McCord-Maughon, J. Qin, H. Röckel, M. Rumi, X.L. Wu, S.R. Marder, J.W. Perry, Nature, Vol 398, 1999, pp51-54.)

Cependant, lorsque le milieu est irradié par deux faisceaux mutuellement cohérents respectivement à ω et 2ω, où 2ω est en résonance avec la bande d'absorption des chromophores photosensibles, l'orientation résiduelle devient dans certaines conditions non centro-symétrique (par exemple, polaire si les molécules orientées sont elles-mêmes dipolaires) et non plus axiale comme dans les cas où l'on irradie séparément à ω ou 2ω. Une telle orientation est compatible avec l'existence de propriétés physiques associées à des tenseurs de rang impair, ce qui inclus en particulier la génération de second-harmonique et les mélanges à trois ondes. La configuration la plus générale aboutissant à une telle brisure de centro-symétrie est celle d'une irradiation par trois faisceaux mutuellement cohérents aux trois longueurs d'ondes $\omega_1$, $\omega_2$ et $\omega_3$ satisfaisant à $\omega_1+\omega_2=\omega_3$ (par exemple la pompe et les faisceaux signal et complémentaire d'un oscillateur paramétrique optique) avec $\omega_3$ en résonance avec les spectres d'absorption UV-visible du chromophore photosensible. Le cas plus simple de l'irradiation à deux longueurs d'onde correspond au cas à trois photons avec dégénéré, avec $\omega_1=(\omega_2=\omega)$ et $\omega_3=2\omega$. On interprète au niveau microscopique un tel phénomène comme une interférence quantique entre processus d'absorption à un et deux photons qui aboutit à une probabilité d'excitation non centro-symétrique et à une rupture de centro-symétrie par couplage du processus de désexcitation à un état dont la structure est transitoirement modifiée (par exemple une photoisomération réversible comme dans le cas des molécules de type photochrome présentant une double liaison N=N entre deux cycles aromatiques et par là une possibilité de photo-isomération réversible de type trans-cis-trans).

## ETAT DE LA TECHNIQUE

Dans le cas d'un faisceau unique polarisé linéairement à une incidence perpendiculaire au support d'enregistrement, les molécules sont ainsi réorientées de façon axiale perpendiculairement à la direction de polarisation du faisceau de pompe. On sait que l'on peut alors distinguer entre différentes directions de polarisation du faisceau d'écriture aboutissant à différentes directions pour l'axe optique imprimé dans le plan du film, permettant ainsi d'accroître la densité d'information stockée en accroissant le nombre de configurations biréfringentes possibles par pixel.

Dans le cas d'une configuration d'irradiation à deux longueurs d'onde mutuellement cohérentes, les états axiaux peuvent se scinder en nouveaux états de symétrie polaire comme représenté sur la Table 1. Par exemple dans le cas de faisceaux linéairement polarisés selon une direction commune « verticale », si un ordre axial correspondant à des molécules majoritairement inclinées le long d'une direction « verticale » a été précédemment établi par un effet Weigert avec polarisation horizontale de la pompe, de façon à aboutir à des molécules indifféremment orientées vers le haut ou vers le bas, on aboutit à l'issue d'une deuxième étape d'irradiation à deux longueurs d'onde selon les conditions de polarisation définies ci-dessus à des nouveaux états qui correspondent à des molécules alors préférentiellement orientées soit vers le haut, soit vers le bas. La distinction entre ces deux nouveaux états résulte d'un procédé de contrôle de la phase entre les deux faisceaux d'écriture à ω et 2ω.

Il a été montré notamment dans :

- S. Brasselet et J. Zyss, J.Opt.Soc.Am.B, vol. 15(1),257,1998 - *Feature issue on Organic and Polymeric Nonlinear Optical Materials.*

que ces effets de polarisation peuvent être associés à différents tenseurs d'écriture et notamment :

- pour l'effet Weigert à un photon, à un tenseur de champ électromagnétique de rang 2, $F^{(1)}$, qui est défini par :

$$F^{(1)} = Re_{\llcorner} \; E^{\omega} \otimes (E^{\omega})^* {\lrcorner} \tag{1}$$

où Re désigne la partie réelle, $\otimes$ le produit tensoriel, et * le conjugué ;

- pour l'effet dégénéré d'interférence à un et deux photons mettant en oeuvre un faisceau laser infrarouge et son rayonnement harmonique, à un tenseur de champ électromagnétique de rang 3, $F^{(2)}$, qui se définit par :

$$F^{(2)} = Re_{\llcorner} \; E^{\omega} \otimes E^{\omega} \otimes (E^{\omega})^* {\lrcorner} \tag{2}$$

On notera que les notations définies ici et dans la suite du présent texte sont les mêmes que celles utilisées dans l'article précité, auquel on pourra avantageusement se référer.

Les composantes des tenseurs de champ électromagnétique $F^{(n)}$ peuvent être exprimées de façon invariante dans le formalisme des représentations tensorielles irréductibles vis-à-vis des rotations comme coefficients doublement indexés notés $F_m^J$ avec J = 0,1,2,3 (jusqu'au rang du tenseur c'est à dire 2 pour $F^{(1)}$ et 3 pour $F^{(2)}$) et $-J \leq m \leq J$.

Il a également été montré dans l'article de Brasselet et Zyss précité que les susceptibilités linéaires et non linéaires photoinduites peuvent être exprimées, dans le cadre d'une approximation du premier ordre vis-à-vis du tenseur d'écriture, selon les expressions:

$$\chi^{(1)^J} m = \lambda_J^{(1)} \; F^{(1)^J} m \qquad avec \; J = 0,2 \qquad\qquad (3)$$

$$\chi^{(2)^J} m = \lambda_J^{(2)} \; F^{(2)^J} m \qquad avec \; J = 1,3 \qquad\qquad (4)$$

où les coefficients $\lambda_J^{(1)}$ et $\lambda_J^{(2)}$ dépendent de l'efficacité du processus d'écriture, lui-même lié à des paramètres moléculaires comprenant entre autre les parties imaginaires (à résonance) des tenseurs de polarisabilité $\alpha$ et $\beta$ ainsi que du rendement du couplage avec les états structurellement modifiés couplés à l'état excité et participant au processus de relaxation de l'excitation initiale. Une telle dépendance à vocation à être discutée au cas par cas au vu de la nature du chromophore photosensible et non linéaire choisi.

Le terme $\chi^{(1)0} 0$ (proportionnel à la trace cartésienne) correspond à la contribution isotrope à la polarisabilité macroscopique linéaire alors que le terme $\chi^{(1)2}m$ correspond à la biréfringence, avec les indices $m \neq 0$ pour décrire la biréfringence transverse dans le plan du film. De la même façon, les coefficients $\chi^{(2)J} m$ avec J=1,3 sont les composantes de la susceptibilité quadratique avec les indices $m \neq 0$ correspondant aux coefficients tensoriels dans le plan du film.

## PRESENTATION DE L'INVENTION

Un but de l'invention est de proposer une technique permettant le stockage de données sur un support de mémoire photosensible avec une densité fortement accrue.

Selon l'invention, ce but est atteint en codant les données en fonction de différents états possibles pour les différentes composantes d'un tenseur de susceptibilité non linéaire du support photosensible et en irradiant simultanément au moins un point dudit support par des faisceaux d'écriture dont on contrôle la polarisation pour photoinscrire un tenseur de susceptibilité non linéaire donné sur le support photosensible.

Par exemple, pour des données binaires, on associe le niveau 0 à une composante nulle et le niveau 1 à une composante non nulle.

Il est ensuite possible de lire les états des différentes composantes tensorielles du tenseur de susceptibilité non linéaire inscrit audit point du support en irradiant ledit point par un ou plusieurs faisceaux de lecture dont on contrôle la polarisation et en mesurant l'intensité du faisceau de réponse qui en résulte pour les différentes directions de polarisations de son champ électrique qui, en combinaison avec celle du champ électrique du faisceau de lecture, correspondent aux différentes composantes que l'on souhaite lire.

Ainsi, pour reprendre l'exemple précédent, l'intensité du faisceau de réponse est nulle, pour une direction de polarisation du champ électrique faisceau de lecture et une direction de polarisation du champ électrique faisceau de réponse données, lorsque la composante tensorielle de la susceptibilité non linéaire est nulle ; la lecture permet alors de déduire que l'information binaire photoinscrite pour cette composante tensorielle est la valeur 0. Lorsque, pour cette direction de polarisation du champ électrique du faisceau de lecture et cette direction de polarisation du champ électrique du faisceau de réponse, l'intensité du faisceau de réponse est non nulle, on déduit que l'information binaire photoinscrite pour cette composante tensorielle est la valeur 1.

On comprend qu'en exploitant ainsi le caractère tensoriel de la susceptibilité non linéaire, on accroît la densité d'information qu'il est possible d'inscrire en un même point d'un support photosensible.

Par ailleurs, selon un autre aspect avantageux de l'invention, les faisceaux d'écriture sont deux faisceaux cohérents dont on contrôle la phase de façon à contrôler le signe des composantes du tenseur de susceptibilité non linéaire.

En effet, comme on le comprendra à la lecture de la description qui suit, il s'avère qu'il est possible de contrôler le signe des composantes d'un tenseur de susceptibilité non linéaire en contrôlant le déphasage entre les faisceaux d'écriture.

Le contrôle du signe des composantes du tenseur qu'il est ainsi possible de réaliser permet encore d'augmenter la densité de stockage d'information au point de photo- inscription.

Le procédé proposé par l'invention est en outre avantageusement complété par les différentes caractéristiques suivantes prises seules ou selon toutes leurs combinaisons techniquement possibles :

-   on superpose à une photoinscription d'un tenseur de susceptibilité linéaire qui correspond à un premier niveau de codage, une photoinscripotion d'un tenseur de susceptibilité non linéaire qui correspond à un deuxième niveau de codage et qui n'apparaît pas à la lecture du premier niveau de codage.

- les faisceaux d'écritures sont au nombre de deux et sont de polarisations respectivement co- et contre-circulaires ;
- le support de mémoire optique comporte un colorant qui est un dérivé d'azobenzène ;
- on irradie le support à différents jeux de faisceaux d'écriture qui correspondent à des longueurs d'onde de photoinscription différentes ;
- le support comporte un colorant qui présente des propriétés d'orientation aux différentes longueurs d'onde qui correspondent à différents jeux de faisceaux d'écriture utilisés ;
- le support comporte plusieurs colorants.

PRESENTATION DES FIGURES

D'autres caractéristiques et avantages de l'invention ressortiront encore de la description qui suit. Cette description est purement illustrative et non limitative et doit être lue en regard des dessins annexés, sur lesquels :

- la figure 1 illustre schématiquement un montage possible pour mettre en oeuvre une photoinscription conforme à l'invention ;
- la figure 2 est un graphe sur lequel on a porté l'évolution temporelle de l'intensité mesurée par le photodétecteur du montage de la figure 1 lors d'une photoinscription d'une composante tensorielle ;
- la figure 3 illustre schématiquement un montage de lecture possible.

DESCRIPTION DE MODES DE MISE EN OEUVRE POSSIBLES POUR L'INVENTION

Le stockage tensoriel d'information proposé par l'invention est avantageusement mis en oeuvre dans le cas de supports optiques sur lesquels il est possible de photo-inscrire des effets physiques exprimés par des tenseurs d'ordre 2 (cas linéaire habituel correspondant au rang 2 du tenseur diélectrique sous-jacent à l'indice de réfraction et à la biréfringence), ou d'ordre 3 (cas de l'optique non linéaire quadratique), voire d'ordre supérieur.

A titre d'exemple, en utilisant uniquement des polarisations linéaires parallèles et un milieu d'enregistrement de type azo-polymère, on obtient simplement les quatre états d'orientations moléculaires représentés sur le tableau 1 en annexe de la description. On peut passer de quatre à sept états en ajoutant aux configurations déjà représentées sur le tableau 1, trois autres configurations correspondant à des faisceaux d'écriture à ω et 2ω polarisés «horizontalement» et non plus seulement verticalement ainsi qu'un faisceau à un photon (effet Weigert simple) polarisé «verticalement ».

Les différentes composantes du tenseur d'écriture correspondant sont détaillées sur le tableau 2 en annexe. L'identification des différentes directions d'alignement correspondant aux différents tenseurs d'écriture est alors un peu plus difficile à représenter qu'au cas précédent correspondant au tableau 1.

En outre, le nombre des états de codage possibles peut être encore multiplié en exploitant, comme le propose l'invention, le caractère tensoriel du tenseur de susceptibilité.

Il peut également être augmenté encore plus en contrôlant de façon adéquate le déphasage entre les faisceaux d'écriture et permet en outre, pour le même point, de multiplier les états de codage correspondant à des ordres moléculaires différents en jouant sur les composantes du tenseur de susceptibilité non linéaire.

Si l'on considère des faisceaux incidents d'écriture polarisés linéairement selon la même direction et faisant un angle φ avec un axe x d'un repère lié au support sur lequel on réalise une photoinsription, on obtient alors les expressions suivantes pour les composantes cartésiennes non nulles du tenseur d'écriture pour le cas du processus à un photon :

$$F_{xx}^{(1)} = E^2 \cos^2 \varphi, F_{yy}^{(1)} = E^2 \sin^2 \varphi, F_{xy}^{(1)} = E^2 \cos\varphi\sin\varphi \qquad (5)$$

ou les expressions équivalentes dans le formalisme sphérique:

$$F^{(1)0}_{\phantom{(1)}0} = -\frac{1}{\sqrt{3}} E^2, \quad F^{(1)2}_{\phantom{(1)}0} = -\frac{1}{\sqrt{6}} E^2, F^{(1)2}_{\phantom{(1)}2} = \frac{1}{2} E^2 e^{2i\varphi}, F^{(1)2}_{\phantom{(1)}-2} = \frac{1}{2} E^2 e^{-2i\varphi} \qquad (6)$$

De la même façon, on obtient pour les composantes cartésiennes des tenseurs d'écriture correspondant au cas des effets conjoints à un et deux photons :

$$F_{xx}^{(2)} = E^3 \cos^3 \varphi \cos(\Delta\phi), \quad F_{xy}^{(2)} = E^3 \cos^2 \varphi \sin \varphi \cos(\Delta\phi)$$

$$F_{xyy}^{(2)} = E^3 \cos \varphi \sin^2 \varphi \cos(\Delta\phi), \quad F_{yyy}^{(2)} = E^3 \sin^3 \varphi \cos(\Delta\phi) \qquad (7)$$

ainsi que leurs contreparties dans le formalisme sphérique :

$$F^{(2)1}_1 = \sqrt{\frac{3}{10}} E^3 e^{i\varphi} \cos(\Delta\phi), \quad F^{(2)1}_{-1} = -\sqrt{\frac{3}{10}} E^3 e^{-i\varphi} \cos(\Delta\phi)$$

$$F^{(2)3}_{-1} = \frac{\sqrt{3}}{2\sqrt{10}} E^3 e^{i\varphi} \cos(\Delta\phi), \quad F^{(2)3}_1 = \frac{\sqrt{3}}{2\sqrt{10}} E^3 e^{-i\varphi} \cos(\Delta\phi) \qquad (8)$$

$$F^{(2)3}_3 = -\frac{1}{2\sqrt{2}} E^3 e^{3i\varphi} \cos(\Delta\phi), \quad F^{(2)3}_{-3} = \frac{1}{2\sqrt{2}} E^3 e^{-3i\varphi} \cos(\Delta\phi)$$

avec les notations suivantes pour les produits de champs électriques incidents :

$$E^2 = \|E^\omega E^\omega\|, \quad E^3 = \|E^\omega E^\omega (E^{2\omega})^*\|$$

$\Delta\phi$ étant le déphasage entre les différents faisceaux d'écriture et étant égal à $2\phi^\omega - \phi^{2\omega}$.

Comme on peut le constater au vu de ces expressions, une importante différence entre les processus à un ou deux photons et le processus conjoint à un et deux photons est la contribution, spécifique à ce dernier cas, d'un facteur de déphasage propagatif entre les faisceaux à $\omega$ et $2\omega$ résultant de la dispersion de l'indice de réfraction dans le milieu.

En contrôlant ce facteur de déphasage, on contrôle la direction d'orientation des molécules.

A titre d'exemple, une telle photoinscription peut être réalisée sur un film de polyméthyl métacrylate substitué avec le colorant classiquement connu sous le dénomination DR1 ("disperse red one" selon la terminologie anglo-saxonne généralement utilisée).

Le taux de substitution est par exemple de 0,3 par monomère du polymère.

Ce matériau est solubilisé dans un solvant 112 trichloro éthylène (avec une concentration pondérale de 10%) puis, les couches du matériau photosensible sont déposées à la tournette, à 2000 tours/minutes, sur un substrat de verre, jusqu'à obtenir une épaisseur de film de l'ordre de 1 $\mu$m.

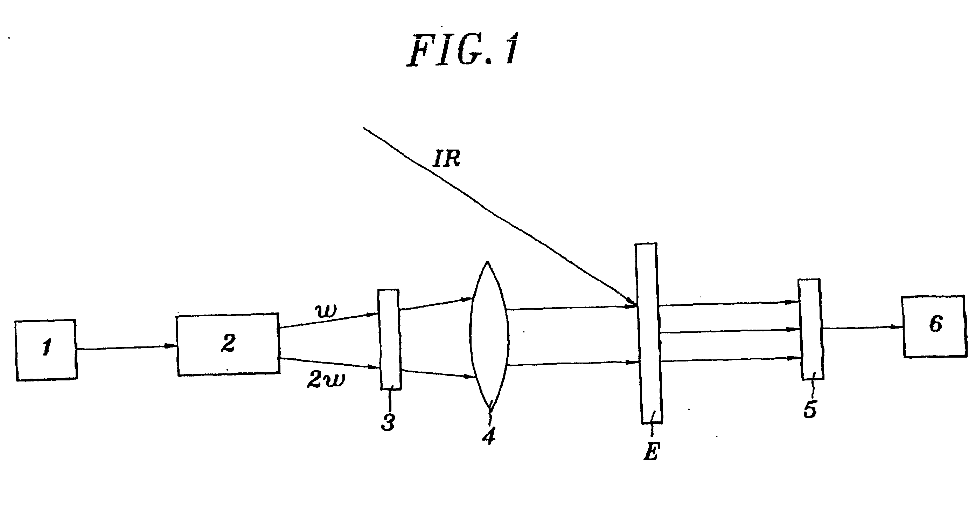

La photo-inscription s'effectue alors au moyen d'un montage du type de celui représenté sur la figure 1.

Ce montage comporte une source laser 1 qui est en l'occurrence un laser YAG pulsé, d'impulsions de largeur de l'ordre de la picoseconde, de 10 Hz de fréquence et d'une énergie de quelques mJ.

Le faisceau en sortie de cette source 1 est injecté sur un cristal doubleur 2 de KDP. Les deux faisceaux en sortie de ce cristal doubleur 2 présentent alors des longueurs d'onde qui sont d'une part de 1,064 micromètres (pour le faisceau de fréquence $\omega$) et d'autre part de 532 nm (pour le faisceau de fréquence $2\omega$). Ces deux faisceaux sont injectés sur des moyens de contrôle de polarisation 3 (polariseur contrôlable), puis à travers des moyens optiques 4, sur l'échantillon E qui porte le film photosensible.

Simultanément à cette inscription, on injecte sur le point de l'échantillon sur lequel est réalisé la photo-inscription un faisceau de lecture infrarouge IR.

Le faisceau de réponse en sortie du film est détecté, après filtration par un filtre infrarouge 5, par des moyens de photodétection 6.

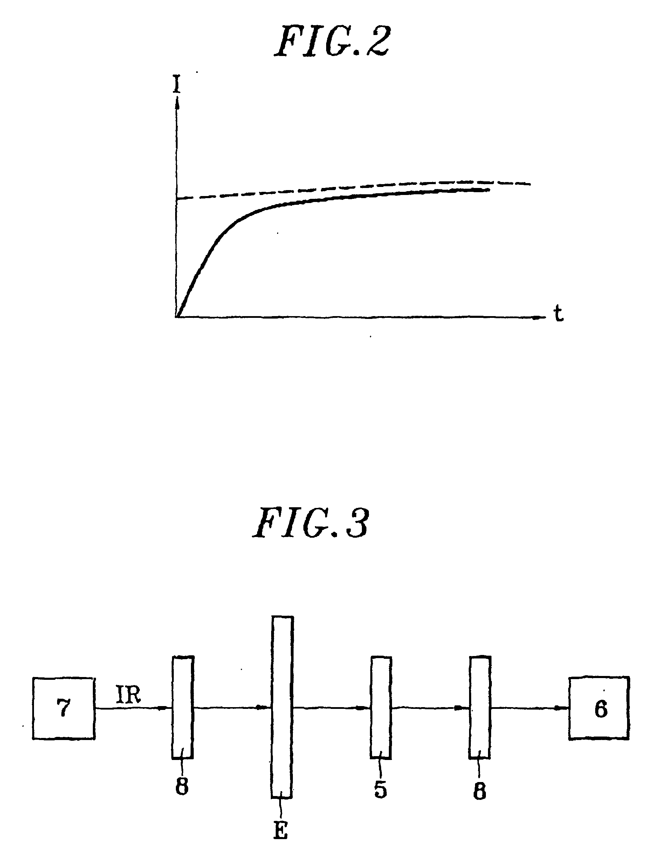

Le processus de photo-inscription est interrompu lorsque l'intensité du signal détecté par les moyens 6 se stabilise, comme représenté sur le graphe de la figure 2.

En jouant sur la polarisation des faisceaux d'écriture, il est possible d'inscrire successivement des états choisis pour les différentes composantes tensorielles de susceptibilité non linéaire.

La lecture des informations ainsi photoinscrites s'effectue au moyen d'un montage tel que représenté sur la figure 3, qui comporte une source 7 pour l'émission en direction d'un échantillon E d'un faisceau de lecture, en l'occurrence infrarouge. Ce montage comporte en outre des moyens de photodétection 6 disposés du côté de l'échantillon opposé à la source 7, des moyens de filtrage 5 interposés entre l'échantillon E et les moyens de photodétection 6, ainsi que des moyens 8 permettant de contrôler les directions de polarisation du champ électrique du faisceau d'écriture et du faisceau de réponse transmis aux moyens de détection.

Par ailleurs, si l'on souhaite réaliser une photo- inscription en contrôlant le signe des composantes tensorielles, on utilise lors de l'écriture des moyens optiques qui comportent une lame dichroïque qui permet de séparer le faisceau de fréquence $\omega$ du faisceau de fréquence $2\omega$ pour introduire un déphasage sur l'un de ces deux faisceaux par rapport à l'autre.

La lecture du signe des composantes tensorielles s'effectue quant à elle en utilisant un matériau de référence dont on connaît le signe des différentes composantes tensorielles sur lequel on envoie le même signe de lecture que sur le matériau photoinscrit. Les faisceaux de réponse en sortie des deux matériaux sont sommés. Selon que l'intensité photodétectée est supérieure ou inférieure à l'intensité photodétectée pour le matériau de référence seul, la composante tensorielle analysée est d'un signe ou d'un autre.

L'invention peut avantageusement trouver application pour cacher des informations sur un support optique.

En effet, dans le cas d'une inscription d'un ordre moléculaire à l'aide de faisceaux à $\omega$ et $2\omega$ de polarisations respectivement co- et contre-circulaires, il ne peut y avoir de biréfringence dans la plan du film puisque les faisceaux sont polarisés circulairement. La lecture selon un procédé « classique » à un photon par exemple en incidence normale entre polariseurs croisés à 45° par rapport à la direction de polarisation d'un faisceau d'écriture présumé unique est alors inapte à déceler l'information inscrite par le procédé non linéaire

On comprend qu'une telle configuration peut-être utilisée aux fins de cacher une photo-inscription à l'insu de l'utilisateur courant.

Un autre exemple de mise en oeuvre peut également être le suivant.

On considère une configuration d'écriture de biréfringence linéaire avec une lumière polarisée linéairement et N orientations spécifiques de la polarisation d'écriture. L'ajout d'un faisceau supplémentaire cohérent avec le précédent et polarisé linéairement permet de dédoubler le nombre d'états en jouant sur le déphasage entre les deux faisceaux. Il en résulte 3N états associés à la biréfringence. En utilisant un faisceau polarisé circulairement, on peut générer neuf états orientationels à savoir un état isotrope plus quatre (combinaisons co et contre- circulaires) fois deux (pour différents déphasages) états. On aboutit ainsi à 3N+9 états possibles pour le codage de chaque pixel.

Le cas N=4 est aisément réalisable en pratique et correspond à des orientations des directions de polarisation angulairement distantes de 45°, ce qui n'est pas une exigence pénalisante pour la lecture entre polariseurs. On aboutit alors à 21 états par pixel. Cela signifie que cette technique permet d'accroître la densité de stockage d'au moins un facteur 10.

La superposition à une information codée linéairement d'une information supplémentaire codée de façon non linéaire présente un grand intérêt dès lors que l'on souhaite cacher des informations, par exemple dans un but d'authentification de documents ou dans un but de dissimulation d'informations. On dispose en effet alors d'un procédé analogue à celui d'une écriture au moyen d'une encre sympathique.

A un premier niveau d'accès, l'utilisateur n'aura accès qu'à l'information codée de façon linéaire traditionnelle. L'information stockée par écriture non linéaire - qui correspond alors à un niveau d'accès restreint lui est alors absolument invisible. Elle ne devient accessible qu'aux détenteurs du matériel permettant la lecture non linéaire.

Les temps d'accès permettant d'inscrire ou de lire les effets physiques qui viennent d'être décrits dépendent fortement de la matrice hôte de polymère dont la viscosité gouverne par le biais des interactions intermoléculaires le temps de réorientation du chromophore non linéaire photosensible.

La durée des impulsions joue également un rôle important dans la dynamique orientationnelle, des durées courtes étant des durées optimales [Optical poling of azo-dye doped thin film using an ultra-short pulse laser, K. Kitaoka, J. Si, T. Mitsuyu, K. Hirao, Appl. Phys. Lett., 75(2),(1999), pp 157-159].

Ces temps d'accès peuvent encore être diminués en utilisant une configuration parallèle d'écriture / lecture mettant en oeuvre les possibilités de l'optique en matière de parallélisme.

Par ailleurs, les propriétés intrinsèques du matériau lui-même sont également importantes : la nature du couplage tensoriel entre le tenseur optique d'écriture et la molécule dépend des propriétés non linéaires de la molécule et de ses propres caractéristiques tensorielles. C'est ainsi que la possibilité d'écrire une information présentant des caractéristiques de symétrie tensorielle dites « octupolaire » (resp. «dipolaire») dépend de la présence de composantes de même nature dans le tenseur moléculaire et donc de la structure de la molécule (par exemple la symétrie de son ensemble de substituants dans le cas d'un cycle aromatique latéralement substitué par des groupements à transfert de charge).

Les molécules octupolaires se distinguent par une absence nette de dipôle permanent au niveau moléculaire tout en étant non centrosymétrique. Les molécules tétraédriques sont particulièrement intéressantes à cet égard car leur polarisabilité linéaire (le tenseur $\alpha$) se caractérise en outre par une absence d'anisotropie (e.g. $\delta\alpha=0$ et c'est ce tenseur $\delta\alpha$ qui est à l'origine microscopique de la biréfringence ainsi que de l'orientation par effet Kerr optique). On peut alors inscrire une information non-linéaire sans biréfringence linéaire de façon à aboutir à un support comportant une information non linéaire cryptée et présentant un niveau linéaire vierge de tout enregistrement.

**EP 1 247 277 B1**

Un autre aspect important est la nature du matériau photosensible et ses caractéristiques physico-chimiques. Une famille particulièrement pertinente est celle des colorants dérivés des azobenzènes, lesquels colorants sont connus pour leur aptitude à la réorientation moléculaire ainsi qu'à la fonctionalisation pour l'ONL quadratique par greffage de groupement électro-donneurs et électro-accepteurs d'électrons.

Des matériaux qui peuvent être utilisés se présentent par exemple sous la forme d'un film hôte recevant des molécules invitées, ou encore sous la forme de polymères greffés en chaîne latérale ou principale et éventuellement réticulables. On peut également envisager comme matrices des cristaux liquides ou des polymères liquides-cristallins. Tout autre matériau susceptible de contenir des molécules aptes à la réorientation photo-induite et à potentiel ONL (tant pour assurer le couplage orientationnel avec le tenseur champ d'écriture que pour assurer la lecture en génération de second harmonique) sont des candidats possibles. De plus, la structure physique du support d'enregistrement peut être conçue en architecture multi-couche, chaque couche réalisant une propriété spécifique. Une couche optiquement non linéaire peut être déposée sur un autre substrat et se prêter ainsi à la superposition physique de couches d'information de nature différente.

Dans les exemples ci-dessus, on s'est restreint à une seule entité active dans le film et un seul jeu de longueurs d'onde par spectre en écriture /lecture (en l'occurrence un doublet de longueurs d'onde). Toutefois, il est possible de généraliser le principe de la technique qui vient d'être décrite à plusieurs entités moléculaires présentant des bandes d'absorption à supports spectral distincts de façon à bénéficier des avantages du multiplexage en longueur d'onde et/ ou à plusieurs jeux de longueurs d'onde en écriture/ lecture. En effet, l'efficacité de l'enregistrement / écriture en mode optique non linéaire est sensible à la résonance entre les transitions moléculaires UV-visible et la longueur d'onde du faisceau de plus forte énergie parmi les trois (ou les deux dans le cas dégénéré), le rendement présentant un maximum plus ou moins accentué dans des conditions de quasi résonance.

On peut donc combiner les configurations suivantes :

- une seule espèce de molécules fonctionnelles à spectre large (élargissement inhomogène pouvant atteindre plusieurs cm$^{-1}$ à température ambiante et correspondant à la dispersion statistique des configurations relatives de la molécule fonctionnelle vis-à-vis de la matrice hôte) dont on utilise différentes propriétés spectrales correspondant à des réorientations photoinduites à plusieurs longueurs d'onde ;

- un mélange de deux colorants (ou plus) à spectres distincts mais se recouvrant permet d'étendre la largeur spectrale inscriptible et de multiplier le nombre d'états inscriptibles par spectre (selon le schéma précédent, c'est à dire à un jeu de longueurs d'onde ou plus) par le nombre d'espèces spectralement adressables (compte tenu de la plage d'excursion utilisable des sources disponibles). On peut aussi envisager un mélange où les espèces sont choisies de façon à minimiser les intervalles spectraux entre pics de façon à assurer une couverture spectrale quasi continue sur une large bande et assurer ainsi un mode de lecture / écriture le plus indépendant possible de la longueur d'onde d'écriture / lecture (e.g. caractère spectralement non critique ou "hole-burning" large bande. De ce fait, les longueurs d'onde d'écriture à un et deux photons seront simultanément quasi-résonnantes pour une espèce moléculaire donnée. La lecture à une longueur d'onde fondamentale non résonnante est valable pour toute espèce moléculaire.

Tableau 1:

| Configurations simples pouvant être observées par utilisation de faisceaux polarisés linéairement avec contrôle de leur phase relative. | | | | |
|---|---|---|---|---|
| Etat (orientation moléculaire dans le plan) | | | | |
| Nature de l'ordre | isotrope | axial | axial et non centre symétrique | axial et non centro symétrique |
| Polarisation des faisceaux d'écriture et déphasage | Aucun ou polarisation circulaire | Un faisceau polarisé linéairement | Deux faisceaux polarisés linéairement | Deux faisceaux polarisés linéairement |
| Biréfringence | nulle | oui | oui | Oui |
| Tenseur ONL | nul | nul | oui, >0 | oui, <0 |

Tableau 2 :

| Composantes tensorielles cartésiennes et sphériques du tenseur d'écriture optique dans le cas de polarisations co ou contra-circulaires avec faisceaux cohérents. représentation cartésienne : chaque composante de la table ci-dessous doit être multipliée par un facteur d'amplitude $$\frac{1}{2\sqrt{2}}E^3.$$ | | | | |
|---|---|---|---|---|
| | $F_{XXX}$ | $F_{XXY}$ | $F_{YYX}$ | $F_{YYY}$ |
| $E^\omega(\sigma+)E^{2\omega}(\sigma+)$ | $\cos(\Delta\phi)$ | $-\sin(\Delta\phi)$ | $\cos(\Delta\phi)$ | $-\sin(\Delta\phi)$ |
| $E^\omega(\sigma-)E^{2\omega}(\sigma-)$ | $\cos(\Delta\phi)$ | $\sin(\Delta\phi)$ | $\cos(\Delta\phi)$ | $\sin(\Delta\phi)$ |
| $E^\omega(\sigma+)E^{2\omega}(\sigma-)$ | $\cos(\Delta\phi)$ | $-3\sin(\Delta\phi)$ | $3\cos(\Delta\phi)$ | $-\sin(\Delta\phi)$ |
| $E^\omega(\sigma-)E^{2\omega}(\sigma+)$ | $\cos(\Delta\phi)$ | $3\sin(\Delta\phi)$ | $3\cos(\Delta\phi)$ | $\sin(\Delta\phi)$ |

Représentation sphérique : chaque composante de la table ci-dessous doit être multipliée par un facteur d'amplitude $E^3$.

| | $F_1^1$ | $F_1^{-1}$ | $F_3^3$ | $F_3^1$ | $F_3^{-1}$ | $F_3^{-3}$ |
|---|---|---|---|---|---|---|
| $E^\omega(\sigma+)E^{2\omega}(\sigma+)$ | $\frac{1}{2}\sqrt{\frac{3}{5}}e^{-i\phi}$ | $-\frac{1}{2}\sqrt{\frac{3}{5}}e^{i\phi}$ | $\frac{1}{4}e^{i\phi}$ | $\frac{1}{4}\sqrt{\frac{3}{5}}e^{-i\phi}$ | $-\frac{1}{4}\sqrt{\frac{3}{5}}e^{-i\phi}$ | $-\frac{1}{4}e^{-i\phi}$ |
| $E^\omega(\sigma-)E^\omega(\sigma-)$ | $\frac{1}{2}\sqrt{\frac{3}{5}}e^{i\phi}$ | $-\frac{1}{2}\sqrt{\frac{3}{5}}e^{-i\phi}$ | $\frac{1}{4}e^{-i\phi}$ | $\frac{1}{4}\sqrt{\frac{3}{5}}e^{-i\phi}$ | $-\frac{1}{4}\sqrt{\frac{3}{5}}e^{-i\phi}$ | $-\frac{1}{4}e^{i\phi}$ |
| $E^\omega(\sigma+)E^{2\omega}(\sigma-)$ | $\sqrt{\frac{3}{5}}e^{-i\phi}$ | $-\sqrt{\frac{3}{5}}e^{i\phi}$ | $e^{i\phi}$ | $\frac{1}{2}\sqrt{\frac{3}{5}}e^{-i\phi}$ | $\frac{1}{2}\sqrt{\frac{3}{5}}e^{i\phi}$ | $-e^{-i\phi}$ |
| $E^\omega(\sigma-)E^\omega(\sigma+)$ | $\sqrt{\frac{3}{5}}e^{i\phi}$ | $-\sqrt{\frac{3}{5}}e^{-i\phi}$ | $e^{-i\phi}$ | $\frac{1}{2}\sqrt{\frac{3}{5}}e^{i\phi}$ | $\frac{1}{2}\sqrt{\frac{3}{5}}e^{-i\phi}$ | $-e^{i\phi}$ |

Tableau 3 :

| : Différents niveaux possibles de protection de l'information par codage mixte en modes linéaire et non linéaire. | | | | |
|---|---|---|---|---|
| Application | Lecture linéaire | Ecriture linéaire | Lecture NL | Ecriture NL |
| Couche non linéaire cachée, lecture seulement, "encre sympathique" | Oui | Non | Non | Non |
| Couche non linéaire cachée, "encre sympathique" | Oui | Oui | Non | Non |
| Couche NL en lecture, "encre sympathique", authentification | Oui | Oui | Oui | Non |
| Couche NL lecture/écriture, très haute densité | Oui | Oui | Oui | Oui |

**Revendications**

1.  Procédé mettant en oeuvre une photoinscription de données sur un support de mémoire photosensible, **caractérisé en ce que** les données sont codées en fonction de différents états possibles pour les différentes composantes d'un tenseur de susceptibilité non linéaire d'ordre 2 ou supérieur, du support photosensible et **en ce qu'**on irradie simultanément au moins un point dudit support par des faisceaux d'écriture dont on contrôle la polarisation pour photoinscrire un tenseur de susceptibilité non linéaire donné sur le support photosensible.

**2.** Procédé selon la revendication 1, **caractérisé en ce que** le support de mémoire photosensible est en un matériau actif en optique non linéaire quadratique, le tenseur de susceptibilité non linéaire étant d'ordre 3.

**3.** Procédé selon l'une des revendications 1 ou 2, **caractérisé en ce qu'**on met en oeuvre une irradiation conjointe à 1 et 2 photons.

**4.** Procédé selon l'une des revendications précédentes, **caractérisé en ce que**; pour lire les états des différentes composantes tensorielles du tenseur de susceptibilité non linéaire inscrit audit point du support, on irradie ledit point par un faisceau de lecture dont on contrôle la polarisation et on mesure l'intensité du faisceau de réponse qui en résulte pour les différentes directions de polarisations de son champ électrique qui, en combinaison avec celle du champ électrique du faisceau de lecture, correspondent aux différentes composantes que l'on souhaite lire.

**5.** Procédé selon l'une des revendications précédentes, **caractérisé en ce que** les faisceaux d'écriture sont deux faisceaux cohérents dont on contrôle la phase de façon à contrôler le signe des composantes du tenseur de susceptibilité non linéaire.

**6.** Procédé selon l'une des revendications précédentes, **caractérisé en ce qu'**on superpose à une photoinscription d'un tenseur de susceptibilité linéaire qui correspond à un premier niveau de codage, une photoinscription d'un tenseur de susceptibilité non linéaire qui correspond à un deuxième niveau de codage et qui n'apparaît pas à la lecture du premier niveau de codage.

**7.** Procédé selon l'une des revendications précédentes, **caractérisé en ce que** les faisceaux d'écritures sont au nombre de deux et sont de polarisations respectivement co- et contre-circulaires.

**8.** Procédé selon l'une des revendications précédentes, **caractérisé en ce que** le support de mémoire optique comporte un colorant qui est un dérivé d'azobenzène.

**9.** Procédé selon l'une des revendications précédentes, **caractérisé en ce qu'**on irradie le support à différents jeux de faisceaux d'écriture qui correspondent à des longueurs d'onde de photoinscription différentes.

**10.** Procédé selon la revendication 9, **caractérisé en ce que** le support comporte un colorant qui présente des propriétés d'orientation aux différentes longueurs d'onde qui correspondent à différents jeux de faisceaux d'écriture utilisés.

**11.** Procédé selon la revendication 9, **caractérisé en ce que** le support comporte plusieurs colorants.

**Patentansprüche**

**1.** Verfahren zum Durchführen eines lichtinduzierten Schreibvorgangs von Daten auf einem lichtempfindlichen Speicherträger, **dadurch gekennzeichnet, dass** die Daten in Abhängigkeit von verschiedenen Zuständen codiert werden, die für die verschiedenen Komponenten eines nichtlinearen Suszeptibilitätstensors 2. oder höherer Ordnung des lichtempfindlichen Trägers möglich sind, und dass gleichzeitig wenigstens ein Punkt des Trägers mit Schreibstrahlen bestrahlt wird, deren Polarisation zum lichtinduzierten Schreiben eines gegebenen, nichtlinearen Suszeptibilitätstensors auf dem lichtempfindlichen Träger eingestellt wird.

**2.** Verfahren nach Anspruch 1, **dadurch gekennzeichnet, dass** der lichtempfindliche Speicherträger aus einem quadratisch nichtlinearen optischen aktiven Material besteht, wobei der nichtlineare Suszeptibilitätstensor von der Ordnung 3 ist.

**3.** Verfahren nach einem der Ansprüche 1 oder 2, **dadurch gekennzeichnet, dass** eine gleichzeitige Bestrahlung mit ein und zwei Photonen vorgenommen wird.

**4.** Verfahren nach einem der vorangehenden Ansprüche, **dadurch gekennzeichnet, dass** zum Lesen der Zustände der verschiedenen Tensorkomponenten des nichtlinearen Suszeptibilitätstensors, der an den Punkt des Trägers geschrieben wurde, der Punkt mit einem Lesestrahl bestrahlt wird, bei dem die Polarisation eingestellt ist, und die Intensität des Antwortstrahls gemessen wird, die sich dabei je nach den verschiedenen Richtungen der Polarisation seines elektrischen Feldes ergibt, die in Zusammenhang mit dem des elektrischen Feldes des Lesestrahls den verschiedenen Komponenten entspricht, die gelesen werden sollen.

**5.** Verfahren nach einem der vorangehenden Ansprüche, **dadurch gekennzeichnet, dass** die Schreibstrahlen zwei kohärente Strahlen sind, deren Phase derart eingestellt ist, dass das Vorzeichen der Komponenten des nichtlinearen Suszeptibilitätstensors eingestellt wird.

**6.** Verfahren nach einem der vorangehenden Ansprüche, **dadurch gekennzeichnet, dass** ein lichtinduzierter Schreibvorgang eines nichtlinearen Suszeptibilitätstensors, der einer ersten Codierungsebene entspricht, einem lichtinduzierten Schreibvorgang eines linearen Suszeptibilitätstensors überlagert wird, der einer zweiten Codierungsebene entspricht und der bei dem Lesen der ersten Ebene der Codierung nicht in Erscheinung tritt.

**7.** Verfahren nach einem der vorangehenden Ansprüche, **dadurch gekennzeichnet, dass** zwei Schreibstrahlen verwendet werden, wobei die Polarisationen zirkular bzw. gegenzirkular sind.

**8.** Verfahren nach einem der vorangehenden Ansprüche, **dadurch gekennzeichnet, dass** der optische Speicherträger einen Farbstoff aufweist, der auf Azobenzol basiert.

**9.** Verfahren nach einem der vorangehenden Ansprüche, **dadurch gekennzeichnet, dass** der Träger mit verschiedenen Gruppen von Schreibstrahlen bestrahlt wird, die verschiedenen Wellenlängen für den lichtinduzierten Schreibvorgang entsprechen.

**10.** Verfahren nach Anspruch 9, **dadurch gekennzeichnet, dass** der Träger einen Farbstoff umfasst, der Orientierungseigenschaften in Bezug auf die verschiedenen Wellenlängen aufweist, die verschiedenen Gruppen von verwendeten Schreibstrahlen entsprechen.

**11.** Verfahren nach Anspruch 9, **dadurch gekennzeichnet, dass** der Träger mehrere Farbstoffe aufweist.

**Claims**

**1.** Method for optical recording of data on a photosensitive memory medium, **characterized in that** the data are encoded according to various possible states for the various components of a non-linear susceptibility tensor of order 2 or above of the photosensitive medium and **in that** at least one point in said medium is simultaneously irradiated by write beams, the polarization of which is controlled in order for a given non-linear susceptibility tensor to be optically recorded in the photosensitive medium.

**2.** Method according to Claim 1, **characterized in that** the photosensitive memory medium is made of a quadratic non-linear optical material, the non-linear susceptibility tensor being of order 3.

**3.** Method according to either of Claims 1 and 2, **characterized in that** single-photon and two-photon combined irradiation is employed.

**4.** Method according to one of the preceding claims, **characterized in that**, to read the states of the various tensor components of the non-linear susceptibility tensor recorded at said point in the medium, said point is irradiated by one or more read beams, the polarization of which is controlled, and the intensity of the response beam which results therefrom is measured for the various polarization directions of its electric field which, in combination with that of the electric field of the read beam, correspond to the various components that it is desired to read.

**5.** Method according to one of the preceding claims, **characterized in that** the write beams are two coherent beams, the phase of which is controlled so as to control the sign of the components of the non-linear susceptibility tensor.

**6.** Method according to one of the preceding claims, **characterized in that** the optical recording of a linear susceptibility tensor, which corresponds to a first encoding level, is superimposed on the optical recording of a non-linear susceptibility tensor, which corresponds to a second encoding level and which does not appear on reading the first encoding level.

7. Method according to one of the preceding claims, **characterized in that** the write beams are two in number and have cocircular and countercircular polarizations, respectively.

8. Method according to one of the preceding claims, **characterized in that** the optical memory medium contains a dye which is an azobenzene derivative.

9. Method according to one of the preceding claims, **characterized in that** the medium is irradiated with various sets of write beams which correspond to different optical recording wavelengths.

10. Method according to Claim 9, **characterized in that** the medium contains a dye which has orientation properties at the various wavelengths which correspond to various sets of write beams used.

11. Method according to Claim 9, **characterized in that** the medium contains several dyes.

EP 1 247 277 B1

# FIG.1

## FIG.2

## FIG.3